# EUROPEAN PATENT APPLICATION

(11) **EP 2 107 515 A1**
(43) Date of publication of application: **07.10.2009**
(21) Application number: 09003303.6
(22) Date of filing: 06.03.2009
(51) Int. Cl.: G06Q 10/00

(54) **System and method for accessing documents**

(30) Priority: 31.03.2008 US 60259
(71) Applicant: SAP AG, 69190 Walldorf (DE)
(72) Inventor: Mohr, Julia, 69190 Walldorf (DE)
(74) Representative: Müller-Boré & Partner Patentanwälte

(57) **Abstract**

A system and/or method are provided in which a user may generate a desktop widget in the form of an icon on the user's computer desktop, for example, for relatively immediate access to reports or documents generated by an enterprise computer software application in an enterprise services system. The icon or desktop widget provided may be associated with a link or command pathway to the specific report or file or may be dynamic in the sense that any modification within the report portal that affects the specific report may be reflected in the subsequent access to the specific report on a backend system, for example, by the user. A report or desired document, is thus readily provided to a user upon a click or selection of the icon or widget.

## Description

**BACKGROUND INFORMATION**

Reports are end products of enterprise computer software applications, e.g., SAP Business One. Reports may include actual vs. budget profits for each profit center in bar graphs over a period of time, e.g., one fiscal year, headcount location mix by company locations in a pie graph at a specific time, e.g., at the end of the year, or a regulatory compliance table/spreadsheet. Currently, reports are embedded as part of a reporting platform accessible via a portal. Individual reports for individual business items or events are grouped together in a way that may not be convenient for a user to quickly create an individualized report and access the same quickly. To access an individual report, the user may need to traverse the comprehensive report.

Accordingly, there exists a need for efficient access to reports and other documents located on the backend system of, e.g., an enterprise services architecture system.

**BRIEF DESCRIPTION OF THE DRAWINGS**

Fig. 1 shows an example screen shot of an application which generates reports having a checkbox widget according to an embodiment of the present invention.

Fig. 2 shows an example desktop widget generation according to an embodiment of the present invention.

Fig. 3 shows a cross-functional flowchart illustrating an example desktop widget generation according to an embodiment of the present invention.

**DETAILED DESCRIPTION**

Embodiments of the present invention allow a user to generate a desktop widget in the form of an icon on the user's computer desktop, for example, for reports or documents generated by an enterprise computer software application. For example, available enterprise computer software applications generate reports or other documents. For example, an enterprise computer software application may generate comprehensive reports about employees relating to their monthly salary and expenses. The comprehensive reports are presented to a user through, for example, a report portal for the user to access. The access to the comprehensive report portal may require the user to traverse the report portal, which may be inconvenient to the user when an individual report, e.g., a payroll for a certain month or sales for a defined week or period of time, needs pulled quickly. Accordingly, a user may want a more convenient or different way to access and/or generate a link or command pathway on the user's computer desktop to a specific report or certain report application so that the user may access the specific report quickly. In addition, the link or command pathway to the specific report may be dynamic in the sense that any modification within the report portal that affects the specific report may be reflected in the subsequent access to the specific report by the user.

The desktop widget may represent a link or a command pathway to a file that is stored in a storage so that it may be included in another application, e.g., in a presentation or may represent a pointer pointing to a portion of the report portal that corresponds the particular report. The desktop widget may be generated in response to a user request to the enterprise software application. In one example embodiment, the user may be provided with a checkbox button in a report portal page so that by checking the checkbox button, the user may generate a request to the system for generating a desktop widget for the particular report the user was browsing. The request may further trigger the execution, on a processor, of a computer software application whose code may have been stored in a storage, e.g., a computer memory or disk, based on an embodiment of this application. The software application may invoke a client application executed on a processor residing on a client machine, which may then communicate the user's request to a backend application residing on a server. In one embodiment, the backend application may then based on user's request, generate a file reflecting the particular report the user requested and respond to the client side with a link to the particular report. Alternatively, the backend application may generate a pointer pointing to the particular report, requested by the user, in the report portal and respond to the client side with a pointer pointing to a specific location in the report portal. Based on the link or pointer or command pathway received from the server, the client application may generate a desktop widget for the link or pointer or command pathway and further render a graphical icon on the user's desktop representing the desktop widget linked to the specific report.

An example embodiment of the present invention involves a generation of a desktop widget where the desktop widget is generated through a client/server enterprise software system. The desktop widget is linked to at least one report application which generates a report dynamically in response to activation of the widget. The link of the application which may be associated, e.g., on a backend system, associated with the desktop widget may be accessed via a portal of the system or enterprise software application.

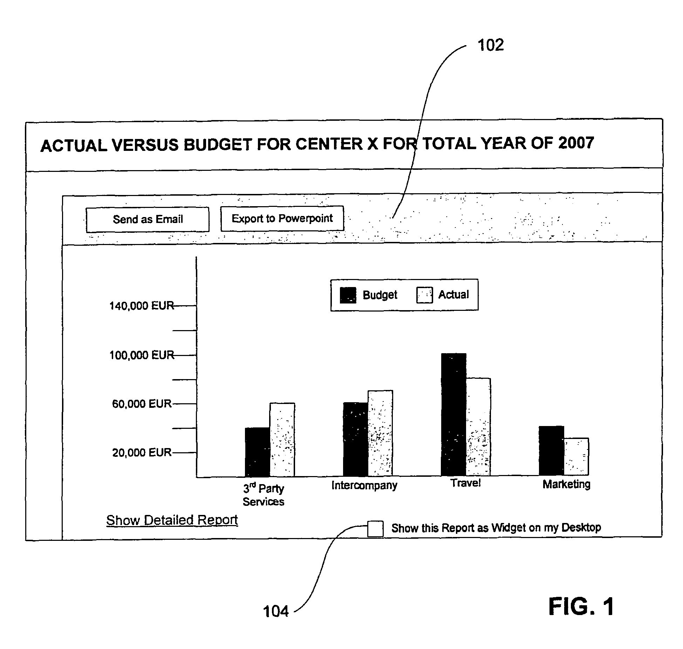

Fig. 1 shows an exemplary screenshot in which an enterprise application includes a checkbox widget to activate the generation of a desktop icon that is linked to a file or pointer to a report portal according to an embodiment of the present invention. Specifically, Fig. 1 shows an example screenshot of a user's computer desktop while the user views a particular report 102 either through an enterprise computer software application, e.g., an SAP Business One ("B1") or through a report portal. In different embodiments of the application, the report may be any type of reports that may be generated from an enterprise application, e.g., reports on the actual and budget revenue for each profit center over a period of time, reports on headcount location mix by company cluster at a specific time, reports on headcount analysis report, reports on regulation compliance for each profit center, reports on recording of an organization on each projects over a year, or a reports on planned versus actual effort per project in person days over a year. In different embodiments, the report may be in different forms, e.g., bar graphs, pie graphs, tables or spreadsheets. In an embodiment, the user is provided with a checkbox button 104 by checking of which, the user may actuate a client application that may trigger the process to generate a desktop widget in the form of a graphic icon on the user's computer desktop. An example system and method to generate such a desktop icon is discussed below. The desktop icon provides a user a convenient way to quickly access the particular report in a later time. In an embodiment, the desktop icon may represent a link to a file generated for the user. In an alternative embodiment, the icon may represent a pointer pointing to a portion within the report portion. In such embodiments, a user may pull up a specific report by actuating the appropriate generated icon on the user desktop.

Enterprise computer software application may be implemented to include a software system designed to support interoperable machine to machine interaction over a network, e.g., Web Service. An example implementation of Web Service may include client machines and server machines that communicate using the Extensible Markup Language ("XML") messages that follow the Simple Object Access Protocol ("SOAP"). XML may be extensible and allow sharing of data cross a network, e.g., the Internet, by standardizing documents and serializing data using, e.g., JavaScript Object Notation ("JSON"). Responsive to a user request, client machines may launch a client application that may trigger communication with backend applications residing on server machines. The communication may take place directly from the client application to the server application if the client application and server application are Web Service enabled, or indirectly through widget foundation classes in a SAP enterprise application, e.g., from SAP Widget Foundation ("SAP WF") on the client machine to a SAP WF on the server machine.

For illustration purposes, SAP WF is an application that may provide Representational State Transfer (REST) XML and JSON interfaces to the SAP system. SAP WF may allow the creation of mashups using SAP and non-SAP services. A mashup is a service that combines content from various backend systems. Moreover, SAP WF may connect to SAP enterprise applications in a SAP backend system using SAP Java Connector ("JCO") and Web Service with support of single sign-on ("SSO") using security management software or user password for authentication.

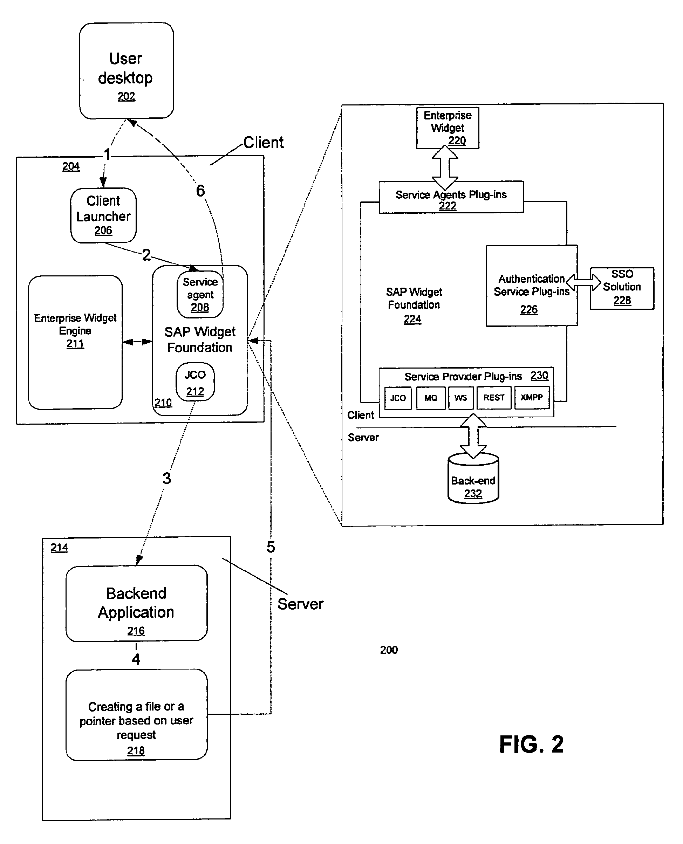

Fig. 2 shows an example system and method for generating a desktop widget according to an embodiment of present invention. The system includes a client machine 104 which may include at least one processor for executing computer codes and at least one storage, e.g., memory or hard disk drive ("HD") for storing the codes. A computer terminal on which a user desktop 202 is graphically rendered in an available way and may be connected to the client machine. For example, in Fig. 1, as discussed above, an example user desktop showing a report 102 and checkbox button 104 for activating an application to generate desktop widget for the report is shown.

In response to a user request, e.g., checking the checkbox button in Fig. 1 or in any other available way to generate a user command, e.g., actuating a special keyboard command, touching a keypad in a specific location, or clicking a computer mouse on an object on a computer screen, the user may launch a client application 206 to start the process to generate a desktop widget. The client machine, e.g., a computer or any type machine that may run a client application, may be loaded with an e.g., Web Service application that may be specified according to, e.g., W3C standard. For example, the Web Service application may be a SAP Widget Foundation 210 ("SAP WF") installed with a Java Runtime Environment ("JRE") and an available widget engine 211, e.g., Yahoo! Widget Engine. The SAP WF is an enterprise communication proxy which by default may reside on the client machine. The SAP WF may handle authentication and communication with backend applications residing on a server machine. The SAP WF, once installed, may run automatically on the client machine upon the startup of the client machine. Alternatively, the SAP WF or other application may be started manually. In an embodiment, a service may be a Java or XQuery language program that handles HTTP requests from widgets, executes business logics and produces results in XML or JSON formats. The SAP WF may further include service agent plug-in(s) 222 containing service agents 208 to communicate with an enterprise widget 220 within an enterprise engine 211. A service agent 208 may be a ZIP file with packed services that may be deployed within SAP WF. Each service agent may serve one or more widgets. Service agents may be coded in Java or any language or script that Java supports. The SAP WF may also include service provider plug-ins 130 for further communicating with backend applications 216 residing on a server. The service provider plug-ins may include, e.g., a SAP JCO 212 or a SAP REST.

The SAP WF 224 may also include authentication service plug-ins 226. Through a single sign on ("SSO") solution, the SAP WF or other may authenticate the web service application that flows from the user through the client to the server.

The SAP JCO may allow calls backend applications residing on a server machine. In an embodiment when the backend application 216, e.g., SAP B1, is Web Service enabled, the JCO may directly call to the backend application. Alternatively, if the backend application is not Web Service enabled, the JCO request from client may call to another SAP WF residing on the server machine. The server SAP WF may in turn communicate the user's request to the backend application on behalf of the client. Upon receiving the request from the client for generating a desktop widget, the backend application 216 may execute computer codes on a processor in the server to create a specific report corresponding to the user's request 218. In one example embodiment, the backend application 216 may generate a file representing the specific report and store the file on a storage, e.g., a HD on the server, and send a link back to the client through the SAP WF on the client machine. Alternatively, the backend application 216 may generate a pointer pointing to a portion in a report portal that corresponds to the specific report requested by the user and send the pointer back to the client through the SAP WF on the client machine.

In response to receiving a reply from the server application, the SAP WF may call the enterprise widget engine 211 and create a widget for the link to report file or pointer to the report portal. The client application 204 may further render a graphic icon on the user's desktop representing the desktop widget associated with the particular report.

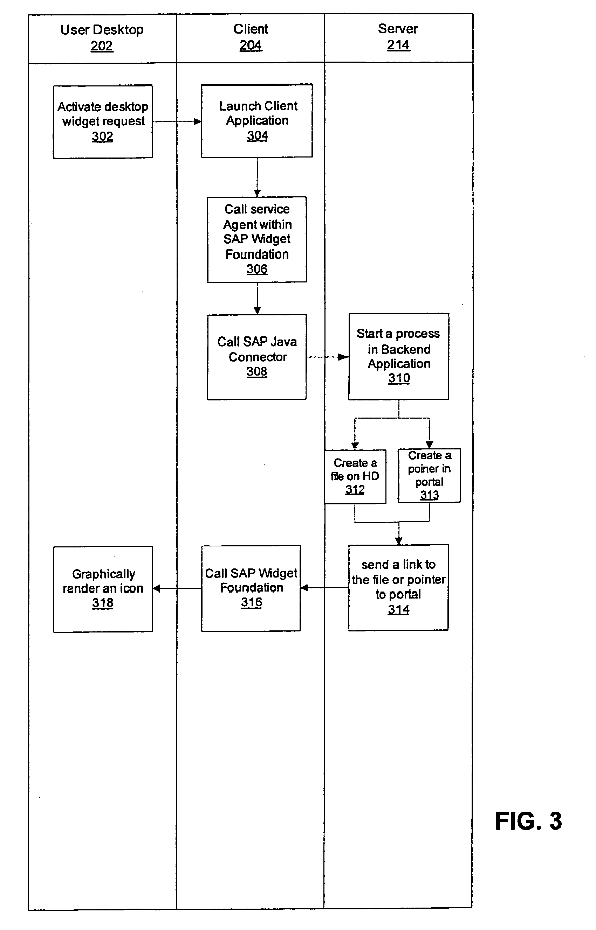

Fig. 3 shows a cross-functional flowchart of a method to generate a desktop widget for enterprise reporting according to one example embodiment of this application. At 302, a user may generate a request for a desktop widget, e.g., by activating checkbox button 104 within a report page 102. The request by the user may contain a command for generating a specific or customized report, e.g., the report that the user may be viewing and would like the report or a regenerated updated report available for later quick access. This request by user may further cause the a client to launch a client application 304 on the client machine which may have a Web Service application concurrently running, e.g., a SAP WF running in conjunction with a widget engine, e.g., a Yahoo! Widget Engine. The SAP WF may include service agents, each of which may communicate with one or more widgets in the widget engine and include SAP JCO for communicating backend applications, e.g., SAP B1. At 306, the client application may call up one or more service agents to start communication with widgets in the widget engine and further at 308, client application may cause the SAP JCO to communicate the user's request to backend application 310. Based on the request from the user, a server application, e.g., the backend application, may create a file and store the file in storage 312, e.g., a HD, or generate pointer pointing to a portion in the portal report 313. The server may then at 314 send the link to the file in storage or the pointer to portal back to the SAP WF on the client machine. Based on the links or pointer from the server, at 316 the client application may generate a desktop widget through the SAP WF that corresponds to the specific report requested by the user. Finally, the client application may graphically render an icon 318 on the user's desktop representing the desktop widget for user later quick access the specific report. The user may simply access the specific report by clicking on the icon presented on the user's desktop at a later time.

In an embodiment according to the present invention, a user may generate a request for a desktop widget, e.g., by activating a trigger within a report page that the user may be viewing. The request by the user may contain a command for generating a particular or customized report, e.g., the report that the user may be viewing and would like the report available for later quick access. This request by user may further cause the launch of a client application on the client machine which may run concurrently, e.g., with a Web Service application. The Web Service or other application may include service agents, each of which may communicate with one or more widgets in a widget engine. The Web Service application or other application may also provide communication connectors for communicating with backend applications on a server. The client application may call up one or more service agents to start communication with widgets in the widget engine, and further client application may cause the communication connectors to communicate the user's request to the backend application. Based on the request from the user, the backend application that supports an enterprise computer software application may create a report file and store the file in storage, e.g., in a HD, or generate a pointer pointing to a portion in the portal report that commonly holds reports. The server may then send the link to the file in storage or the pointer to the report portal back to the communication connectors on the client machine. Based on the link or the pointer from the server, the client application may generate a desktop widget through the application or Web Service application that corresponds to the specific report requested by the user. Finally, the client application may graphically render an icon on the user's desktop representing the desktop widget for later quick access to the particular report. The user may simply access the specific report by clicking on the icon presented on the user's desktop.

Although the present invention has been described with reference to particular examples and embodiments, it is understood that the present invention is not limited to those examples and embodiments. Those embodiments may be used in various combinations with and without each other. Further embodiments of the present invention include variations from the specific examples and embodiments as will be apparent to one of skill in the art.

## Claims

1. A method for providing access to a document in an enterprise services system, comprising:
selecting an option to generate a desktop widget; and
generating a desktop widget icon on a processor,
wherein the desktop widget is associated with at least one of a link, a command pathway, and a pointer, the desktop widget being associated with at least one of an application or file via the respective at least one of the link, command pathway, and pointer,
wherein if the association is with the application, then dynamically generating the document by the application, and if the association is with the file, then providing access via the processor to the document in the file.

2. The method of claim 1, further comprising presenting the document on the processor so that it is at least one of accessible and viewable.

3. The method of claim 1 or 2, wherein the document is a report.

4. A system for providing access to a document in an enterprise services architecture system, comprising:
a widget, the widget selected to remain visible on a viewable screen of a processor; and
a widget engine, the widget engine interfacing with the widget on the processor screen and a backend system of the enterprise services system,
wherein the widget is associated with at least one of a pointer, a link, and a command pathway associated with at least one of an application and a file on the backend system of the enterprise services system, so that upon selection of the widget via the processor the associated at least one of the application and the file produce the document so that it is displayed on the processor screen.

5. The system of claim 4, wherein the application, if associated ultimately with the selected widget, generates a current report as the document to be displayed on the processor screen.

6. The system of claim 5, wherein the document is a report which is one of generated by the application and stored in the file.

7. A computer-readable medium including instructions for a processor adapted to execute a method for providing access to a document in an enterprise services system, comprising:
selecting an option to generate a functional desktop icon; and
generating a functional desktop icon on a processor,
wherein the functional desktop icon is associated with at least one of a link, a command pathway, and a pointer, the functional desktop icon being associated with at least one of an application or file via the respective at least one of the link, command pathway, and pointer,
wherein if the association is with the application, then dynamically generating the document by the application, and if the association is with the file, then providing access via the processor to the document in the file.

8. The computer-readable medium of claim 7, further comprising presenting the document on the processor so that it is at least one of accessible and viewable.

9. The computer-readable medium of claim 7 or 8, wherein the document is a report.
